Europäisches Patentamt

European Patent Office

Office européen des brevets

(19)

(11) Veröffentlichungsnummer : **0 109 922**
**B1**

(12)  **EUROPÄISCHE PATENTSCHRIFT**

(45) Veröffentlichungstag der Patentschrift :
19.08.87

(21) Anmeldenummer : 83730113.4

(22) Anmeldetag : 14.11.83

(51) Int. Cl.⁴ : **G 01 N 35/00**, B 01 L 11/00

(54)  **Probenverteilungsvorrichtung.**

(30) Priorität : 12.11.82 DE 3242458

(43) Veröffentlichungstag der Anmeldung :
30.05.84 Patentblatt 84/22

(45) Bekanntmachung des Hinweises auf die Patenterteilung : 19.08.87 Patentblatt 87/34

(84) Benannte Vertragsstaaten :
AT BE CH DE FR IT LI NL SE

(56) Entgegenhaltungen :
DE-A- 1 598 624
DE-A- 2 042 540
NL-A- 6 705 027
US-A- 3 552 536
US-A- 3 909 203
US-A- 4 099 921

(73) Patentinhaber : Dr. Bruno Lange GmbH
Königsweg 10
D-1000 Berlin 37 (DE)

(72) Erfinder : Höhne, Wolfgang
Blankensteinweg 3 ,
D-1000 Berlin 20 (DE)
Erfinder : Malitz, Reinhard
Nieritzweg 36
D-1000 Berlin 37 (DE)
Erfinder : Schmitt, Wolfgang
Heideläuferweg 31b
D-1000 Berlin 47 (DE)

(74) Vertreter : Christiansen, Henning, Dipl.-Ing.
Dietrich-Schäfer-Weg 21
D-1000 Berlin 41 (DE)

**Beschreibung**

Die Erfindung betrifft eine Probenverteilungsvorrichtung der im Oberbegriff des Anspruchs 1 angegebenen Art.

Aus der US-A-3 552 536 ist eine derartige hauptsächlich für den automatisierten Betrieb vorgesehene Probenverteilungsvorrichtung bekannt, bei der aus einer Anzahl von Proben an einer Entnahmestelle manuell oder automatisch Teilmengen der Proben für verschiedene Analysen entnehmbar sind.

Bei derartigen probenverteilern ist die manuelle Probenverteilung bei Tests langwierig, die für eine große Zahl von Proben vorgenommen werden sollen, da nach dem Voranbewegen des die Probengefäße aufweisenden Trägers jeweils von Hand eine Pipette in eine Probengefäß hineingeführt werden muß, um eine genau zu dosierende Menge zu entnehmen. Bei einer Probenzahl in der Größenordnung von hundert wird der Entnahmevorgang zu einer relativ zeitraubenden Tätigkeit.

Andererseits ist es aber ebenfalls sehr aufwendig, auch für solche Üntersuchungen, die nur an einer kleinen Anzahl der insgesamt vorhandenen Proben vorgenommen werden sollen, die Teilprobenentnahme und nachfolgende Analyse vollautomatisch vorzunehmen. Wenn ein Test für nur eine kleine Probenanzahl vorgenommen werden soll, ist es nämlich äußerst unwirtschaftlich, eine vollautomatisch arbeitende Analysenvorrichtung auf diesen Test einzustellen und nach Ablauf des Tests schon nach kurzer Betriebszeit wieder zu reinigen.

Der Erfindung liegt daher die Aufgabe zugrunde, eine Probenverteilvorrichtung anzugeben, welche es gestattet, flexibel und je nach Bedarf und Mengenanfall kurzfristig zu entscheiden, ob ein Test automatisiert oder manuell durchgeführt werden soll.

Diese Aufgabe wird durch die im kennzeichnenden Teil des Anspruchs 1 angegebenen Maßnahmen gelöst.

Die Erfindung beruht auf der Erkenntnis, daß eine auf die Bedürfnisse eines mittelgroßen Labors zugeschnittene Anordnung die manuelle und automatisierte Analysendurchführung in veränderlicher Zuordnung flexibel ermöglichen sollte, um einerseits eine schnelle Anpassung an einen unterschiedlichen Probenanfall zu ermöglichen und andererseits aber auch jene Starrheit im Betrieb zu vermeiden, die vollautomatische Großanalysensysteme relativ unbeliebt macht. Das erfindungsgemäße System ist insbesondere auch insofern auf die menschliche Bedienungsperson besonders zugeschnitten, als es eigene Entscheidungen und Betätigungen zuläßt und unterstützt, monotone Arbeiten aber abnimmt und insbesondere dazu beiträgt — auch bei zeitlich verschachtelt ausgeführten manuellen und automatischen Analysen — Fehler und Fehlbedienungen unbedingt zu verhindern.

Besonders vorteilhaft dabei ist, daß durch die Art der gewählten Speicherorganisation eine genaue Kontrolle über den Probenverteilvorgang möglich ist und durch einen einzigen Schaltvorgang — der bevorzugt durch eine entsprechende Kennzeichnung von einzugebenden Datenträgern erfolgt — entschieden werden kann, in Richtung auf welche Analysenausführung (Automatik- oder Handbetrieb) die Probenverteilung erfolgen soll.

Durch das zweckmäßige Vorsehen einer Entnahmeöffnung, welche für den manuellen Zugriff zugänglich ist und gleichzeitig zur Beschickung des Probenverteilertellers mit Proben dient, ist eine optimale Handhabbarkeit für die Bedienungsperson gewährleistet, während eine nachzuordnende automatisierte Analysenvorrichtung bevorzugt modulartig seitlich angeschlossen wird, so daß in diesem Bereich eine Entnahme aus den Probengefäßen in einfacher Weise mechanisiert erfolgen kann. Bei anderen Weiterbildungen der Erfindung ist es auch möglich, mehrere Öffnungen für automatische Probenentnahme vorzusehen, während die manuelle Beschickung und Entnahme auf eine Öffnung an der Frontseite beschränkt bleibt. Die Aufteilung kann hier entsprechend den sich ergebenden Verhältnissen zwischen manuell und automatisch durchzuführenden Untersuchungen so getroffen werden, daß durch Parallelbearbeitung die Gesamtzahl der Analysen in optimal kurzer Zeit vorgenommen werden kann.

Die Öffnung für die manuelle Beschickung ist bevorzugt an den Querschnitt der Probenbehälter angepaßt.

Die Öffnung ist dabei insbesondere so gestaltet, daß ein seitliches Griffraster desjenigen Probengefäßes mit den Fingern erreicht werden kann, welches sich gerade in der Zugriffsöffnung befindet. Damit wird durch den programmgesteuerten Ablauf garantiert, daß eine Probenverwechslung nicht eintritt. Insbesondere sind die Probengefäße so gestaltet, daß sie nur in die Öffnungen des Probenverteilertellers oder aber in spezielle Standgefäße passen, nicht aber auf einer ebenen Fläche oder in Reagenzglasständern abstellbar sind, so daß ein gedankenloses Verstellen der Probengefäße und daraus resultierende Verwechslungen verhindert sind.

Um für längere Betriebsunterbrechungen ein Entnehmen der Proben aus dem Bereich des Probenverteilertellers zu ermöglichen und sie zwecks Aufbewahrung geschlossen an einen anderen Ort überführen zu können, ist der Probenverteiler zusätzlich mit einer Abdeckung versehen, welche in einem vorbestimmten Zustand der Steuereinrichtung manuell aufklapp-bzw. anhebbar ist, so daß Trägerelemente, welche jeweils mehrere Proben aufnehmen, schnell entnehmbar sind.

Das Betriebskonzept wird ergänzt durch eine Bedienerführung, die der Bedienungsperson jeweils angibt, welche Handhabungen auszuführen sind. Daten, welche der Bedienungsperson bei dem manuell auszuführenden Untersuchungen bei der Hand bleiben sollen, werden als Kontrollausdruck auf Papier erzeugt, so daß die manuelle Analyse stets kontrollierbar ist und damit auch gleichzeitig eine Unterlage vorliegt, in die spätere manuell ermittelte Analysenergebnisse eingetragen werden können.

Bevorzugt arbeiten die Steuermittel für den Drucker mit dem Speicher in der Weise zusammen, daß die Ausdrucke bezogen auf den Speicherinhalt « spalten- oder zeilenweise » erfolgen, d. h. der Speicherraum zweidimensional organisiert ist, wobei in der einen Speicherdimension die Probendaten aufgetragen sind, während in der anderen Dimension die für die Proben jeweils auszuführenden Untersuchungen angegeben sind. (Bei Anwendungen im medizinischen Bereich beziehen sich die Probendaten auf die jeweils für einen Patienten durchzuführenden Untersuchungen.) Unter « spalten- bzw. zeilenweiser Adressierung » ist hier zu verstehen, daß die Adressierung durch Verändern einzelner Bestandteile der Adressen erfolgen kann.

Bei Variation eines ersten Merkmals der Adressenbezeichnung gelangt man im Speicher zu den verschiedenen eine Probe betreffenden Angaben, während durch Variation eines anderen Merkmals der Adresse alle gleichartigen Angaben für alle Proben durchlaufen werden. Diese Anordnung ist besonders vorteilhaft für die Druckersteuerung, da dadurch sowohl Listen für die einzelnen Proben als auch Listen, welche einzelne Tests für verschiedene Proben betreffen, ohne weiteres abgefragt und ausgedruckt werden können.

Ein vorteilhaftes Ausführungsbeispiel der Erfindung wird nachfolgend anhand eines Analysensystems beschrieben, in das die erfindungsgemäße Lösung integriert ist. Günstige Ausbildungen der Erfindung sind auch in den Unteransprüchen dargestellt. Es zeigen :

Figur 1 eine Gesamtansicht der Probenverteileranordnung,

Figur 1a eine Einzelheit des Probenverteillertellers mit eingesetzten Trägersegmenten für die Probengefäße,

Figur 1b ein einzelnes Probengefäß,

Figur 2 ein Ausführungsbeispiel des Analysatorteils neben dem (nur teilweise wiedergegebenen) Probenverteiler,

Figur 3 eine Prinzipdarstellung des Steuerteils für Probenverteiler- und Analysatorteil sowie

Figur 3a eine Einzelheit der Darstellung gemäß Figur 3.

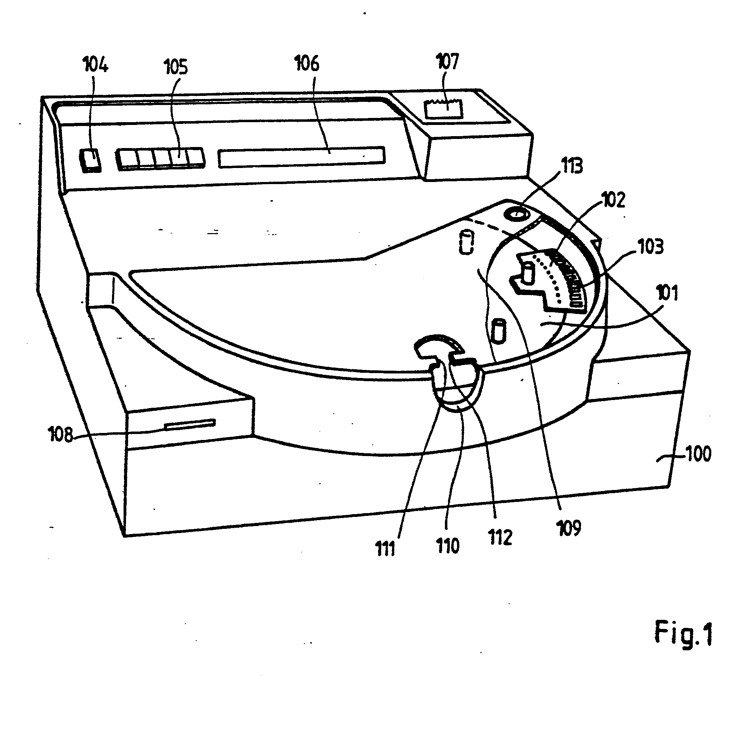

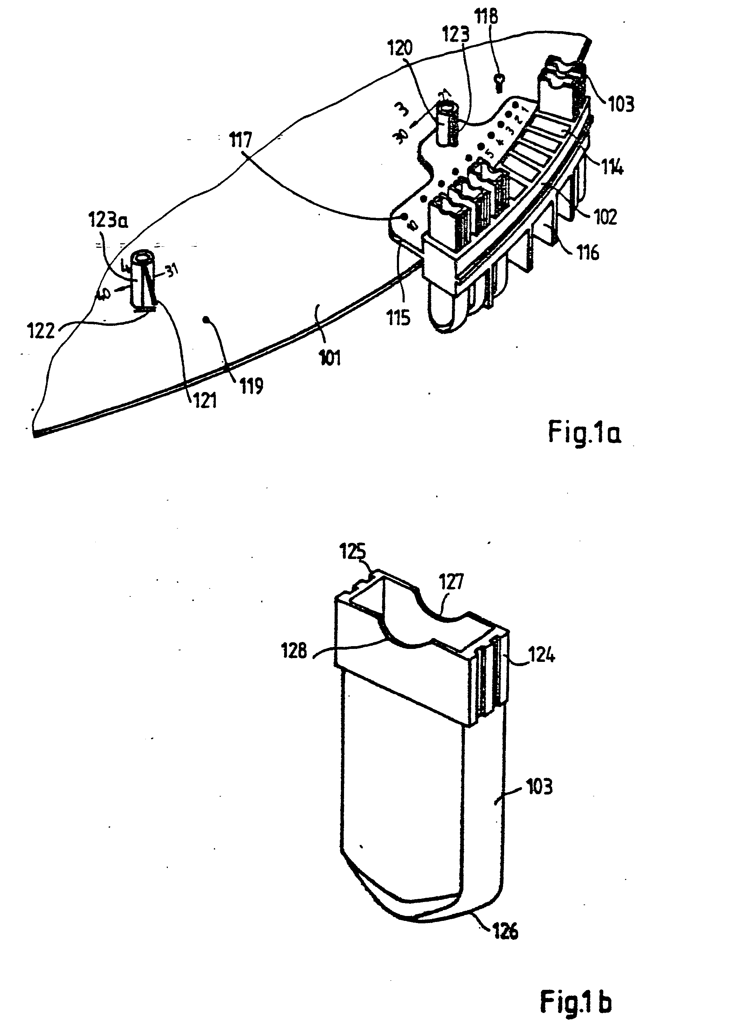

In Figur 1 ist in perspektivischer Darstellung ein Probenverteiler 100 wiedergegeben, welcher auf einem runden scheibenförmigen Teller 101 eine Anzahl von Trägern 102 für Probengefäße 103 aufweist, wobei aus Gründen der Übersichtlichkeit in der Figur lediglich ein Trägerelement wiedergegeben ist. Eine nähere Beschreibung der Trägerelemente und Probengefäße wird weiter unten vorgenommen.

Der Antrieb des Tellers 101 erfolgt durch einen in dieser Figur nicht dargestellten Antriebsmotor.

Die Beschreibung des Antriebs erfolgt gleichfalls weiter unten anhand einer separaten Prinzipdarstellung.

Der Probenverteiler 100 ist dergestalt aufgebaut, daß die Bedienungs-, Anzeige- und Ausgabeelemente sich im hinteren Bereich befinden, wo sie durch Schrägstellung bzw. erhabene Anordnung gut ablesbar und erreichbar sind — die Handhabungen zum Einsetzen und Entnehmen der Probengefäße bzw. zum Entnehmen der Proben aber nicht behindern.

Im einzelnen sind vorgesehen ein Netzschalter 104, verschiedene Steuertasten 105, ein Anzeigefeld 106 sowie ein Drucker 107 als Ausgabeteil für Analysenergebnisse und Protokolle. Während die Tasten 105 im wesentlichen zum Inbetriebsetzen und zum Starten des nächsten Verfahrensschrittes nach zwischenzeitlich erforderlichen manuellen Handhabungen dienen, werden die für die Probenverteilung (und ggf. auch die für Analysenvorgänge) notwendigen Daten über Markierungskarten (oder ähnliche Datenträger) eingegeben, wofür eine Eingabeöffnung 108 vorgesehen ist. In dem Gehäuse des Probenverteilers sind auch die für die Steuerung eines daran anschließbaren Analysatorteils enthalten, dessen Funktion gleichfalls über die vorgenannten Eingabeelemente steuer- und kontrollierbar ist. Der Probenverteiler 100 weist eine Abdeckung 109 auf, welche im geöffneten Zustand den Zugriff zu einem größeren Teil des Tellers 101 zuläßt, so daß die Trägerelemente 102 mitsamt den darin enthaltenen Probengefäßen leicht in die entsprechenden Positionen einsetzbar sind. Die Abdeckung 109 ist transparent gestaltet, so daß der Betriebsablauf und die Tellerbewegungen jederzeit kontrolliert werden können. Der Teller 101 hat Raum für bis zu zehn Trägerelementen mit je zehn Probengefäßen. Er ist so ausgebildet, daß die Probengefäße über seinen Rand hinausragen, so daß die Bauhöhe des Tellers mit den Gefäßen ein Minimum ist.

Die Anordnung der Trägerelemente 102 auf den Teller 101 wird ebenfalls anhand einer separaten Figur noch näher beschrieben werden.

Von besonderer Bedeutung bei dem erfindungsgemäßen Probenverteiler ist die Tatsache, daß eine Beschickungs- und Entnahmeöffnung 110 im unmittelbaren Bereich der Frontseite angeordnet ist, wobei der hier befindliche Teil der Außenwandung des den Teller 101 aufnehmenden Teils sich geringfügig über die Frontfläche des Gerätes in erhabener Form hinauserstreckt. Damit ist einerseits der Vorteil verbunden, daß die Beschickungs- und Entnahmeöffnung 110 besonders leicht erreichbar ist. Weiterhin gestattet es diese Gestaltung auch, den Durchmesser des Tellers für die Trägerelemente derart zu vergrößern, daß eine maximale Zahl von Trägerelementen darauf angeordnet werden kann.

Die Öffnung 110 ist derart im Querschnitt hantelförmig gestaltet, daß ein Probengefäß mit zwei Fingern an seinem oberen Rand ergreifbar ist und in die entsprechende Position des Trägerelementes eingefügt werden kann. Seitliche Begrenzeungsstege 111 und 112, deren Breite auf die Querabmessung der Probengefäße 103 abgestimmt ist, stellen sicher, daß beim Einsetzen lediglich diejenige Öffnung des Trägerelementes 102 zum Einsetzen eines Probeelementes erreichbar ist, für welches eine parallele Dateneingabe zu einer Gruppe von dieser Position des Tellers zugeordneten Speicherplätzen eines Eingabespeichers freigegeben ist. Die Begrenzungsflächen der Stege 111 und 112 bilden dabei eine Verengung, wohingegen die zur Frontseite und in Richtung der Tellermite 101 vorgesehenen Aussparungen erweitert ausgebildet sind, so daß für Daumen und Zeigefinger der Bedienungsperson der erforderliche Spielraum verbleibt, um die Position des betreffenden Probengefäßes zu ertasten und dieses sicher zu ergreifen. Die Öffnung 110 gestattet weiterhin den Zugriff zu dem im Bereich der Öffnung befindlichen Probengefäß mittels einer Pipette zum manuellen Entnehmen von Probensubstanz.

Um einen vorgegebenen Winkel (entsprechend einem Vielfachen der sich durch die Verteilung der Probengefäße auf dem Tellerumfang ergebenden Teilung) versetzt angeordnet ist eine weitere Öffnung 113 mit vorzugsweise Kreisquerschnitt, die einen ausschließlich mechanischen Zugriff erlaubt. Die Öffnung 113 ist in der Nähe einer Seitenwand des Gehäuses des Probenverteilers angeordnet, so daß ein entsprechender Analysatorteil, der zur Entnahme von Probenflüssigkeit in diese Öffnung eingreift und dem Gehäuse des Probenverteilers (100) seitlich benachbart angeordnet ist, mittels eines Schwenkarms geringer Länge eine hohlnadelartige Kanüle zu Entnahmezwecken in die Öffnung 113 einführen kann.

In Figur 1a ist ein Teil des Probenverteilers 101 mit einem segmentförmigen Trägerelement 102 und einer Anzahl von Probengefäßen 103 vergrößert wiedergegeben. Das Element 102 weist zehn Öffnungen 114 auf, welche rechteckig ausgebildet und an den Querschnitt der Probengefäße 103 angepaßt sind. Das Trägerelement 102 hat eine Auflagefläche 115, die horizontal auf dem Teller 101 aufliegt. Zwischen verschiedenen benachbarten Aufnahmeöffnungen 114 sind Stege 116 vorgesehen, die sich in senkrechter Richtung bis über den Bodenteil der Gefäße 103 hinaus erstrecken und eine gerade Standfläche aufweisen. Damit kann jedes die Probengefäße enthaltende Trägerelement 102 geschlossen vom Teller 101 entfernt und bei längeren Arbeitsunterbrechungen außerhalb des Tellers abgestellt werden. Das Trägerelement 102 weist eine Gewichtsverteilung auf, welche es auch ohne Probengefäße standsicher macht.

Um nach dem Zurückführen der Trägerelemente auf den Teller im Probenverteiler ihre ordnungsgemäße Position sicherzustellen, welche der Programmsteuerung und der gespeicherten Probenzuordnung entspricht, sind in dem Auflagebereich 115 Öffnungen 117 vorgesehen, welche die Aufnahme von Codierungselementen 118 gestatten. Die Codierungselemente bilden Stifte, die in die Öffnungen 117 einfügbar sind und deren Stiftende sich durch die Öffnung 117 hindurch erstreckt und bei korrekter Zuordnung der Position des Trägerelementes auf dem Teller 101 in eine entsprechende Codierungsöffnung 119 eingreift. Die Codierungsöffnungen 119 befinden sich jeweils in unterschiedlichen Positionen, so daß eine eindeutige Zuordnung der die Codierungsstifte 118 entsprechend angeordnet enthaltenden Trägerelemente möglich ist.

Bei dem dargestellten Ausführungsbeispiel sind zehn Codierungspositionen für den Stift 118 vorgesehen, wobei die entsprechend numerierten Bohrungen 117 mit den Ziffern 1 bis 10 bezeichnet sind, welche gleichzeitig die entsprechende Zahl der Aufnahmeöffnungen 114 für die Probengefäße 103 kennzeichnen. Damit läßt sich die Position des jeweiligen Probengefäßes innerhalb der Gesamtmenge der Probengefäße ohne besonderes Nachdenken erkennen. Während die durch den Codierungsstift gekennzeichnete Position die Zehnerdezimalstelle bezeichnet, bildet die Position des Probengefäßes innerhalb des Trägerelementes die Einerdezimalstelle. Das mit der Bezugsziffer 103 versehene Probengefäß in Figur la hätte damit die Position « 21 ».

Die Arretierung der Trägerelemente 102 aus Kunststoff auf dem Teller 101 erfolgt mittels hohler und geschlitzter Zentriersäulen 120, welche an die Trägerelemente 102 angespritzt sind. Sie greifen über mit dem Teller verbundene federnde Lagerklemmelemente 121. Die Klemmelemente tragen in ihrem unteren Bereich eine Nase 122, die im ausgefahrenen Zustand der Klemmelemente 121 in eine entsprechende Aussparung (in Figur la nicht dargestellt) eingreifen. Die Klemmelemente 121 sind in einer Nut in einem Pfosten 123a derart geführt, daß sie durch eine von außen aufgebrachte Druckkraft gegen die Wirkung einer inneren Druckfeder in den Pfosten 123a hineinbewegbar sind.

Soll der auf den Pfosten 123a aufgeschobene Träger 102, aus seiner Position entfernt werden, so braucht das Klemmelement 121 lediglich in seinem Griffbereich 123 niedergedrückt zu werden, um die Nase 122 auszurasten und das Trägerelement 102 freizugeben. Die Manipulation läßt sich ohne weiteres mit einer Hand ausführen, d. h. während das Trägerelement 102 mit einigen Fingern ergriffen wird, drückt ein weiterer Finger oder der Daumen das Element 121 nieder, wenn das Trägerelement 102 nach oben abgehoben wird. Ein Entfernen und Einfügen der einzelnen Trägerelemente mit den Probengefäßen ist damit ohne besondere Schwierigkeiten schnell und sicher möglich. Die Position der Säulenträger 120 stellt gleichzeitig die Bezugsposition der Trägerelemente in Bezug auf die Codierungsöffnungen 119 sicher.

In Figur 1b ist ein einzelnes Probengefäß 103 vergrößert wiedergegeben. Das Probengefäß hat einen rechteckigen Querschnitt und weist in seinem oberen Teil einen erweiterten Randbereich auf, der an den einander gegenüberliegenden Schmalseiten mit Profilierungen 124 und 125 versehen ist. Diese Profilierungen sind korreliert zur Gestaltung der Öffnung 110 (in Figur 1) angeordnet. Sie bilden diejenigen Bereiche, in denen das Probengefäß 103 ergriffen wird, wenn es durch die Aussparung 110 hindurch in den Probenverteiler 100 eingesetzt wird. Nur wenn es in diesen Bereichen von Daumen und Zeigefinger gehalten ist, läßt es sich in seiner korrekten Position in eine Öffnung 114 des Trägerelementes einsetzen. Die Abmessungen des Probengefäßes 103 sind derart gewählt, daß es in übliche Reagenzglasständer nicht einsetzbar ist und nicht in der Lage ist, auf einer ebenen Unterlage selbständig zu stehen. Dazu ist die Bodenfläche 126 in einer Ebene mit einem V-förmig verrundetem Querschnitt versehen, während in der senkrecht dazu gerichteten Schnittebene, die die Schmalseite des Gefäßes umfaßt, eine in etwa halbkreisförmige Verrundung vorgesehen ist. Damit wird gleichzeitig erreicht, daß eine Pipette zur Entnahme der in dem Gefäß befindlichen Probensubstanz in der Lage ist, auch geringfügige Reste, die sich im tiefsten Punkt des V-förmigen Bereiches sammeln, zu entnehmen.

Aussparungen 127 und 128, welche die Form von Kreissegmenten aufweisen, dienen zur Zentrierung einer Pipette, welche eine kegelförmige Erweiterung zwischen seinem in das Gefäß eindringenden verengten Bereich und dem das Probenvolumen aufnehmenden zylindrischen Teil enthält, und gestatten ihr ein tiefes Eindringen in das Gefäß 103. Sie bilden gleichzeitig eine zweckmäßige Auflage für ein rundes Gefäß zum Dekantieren.

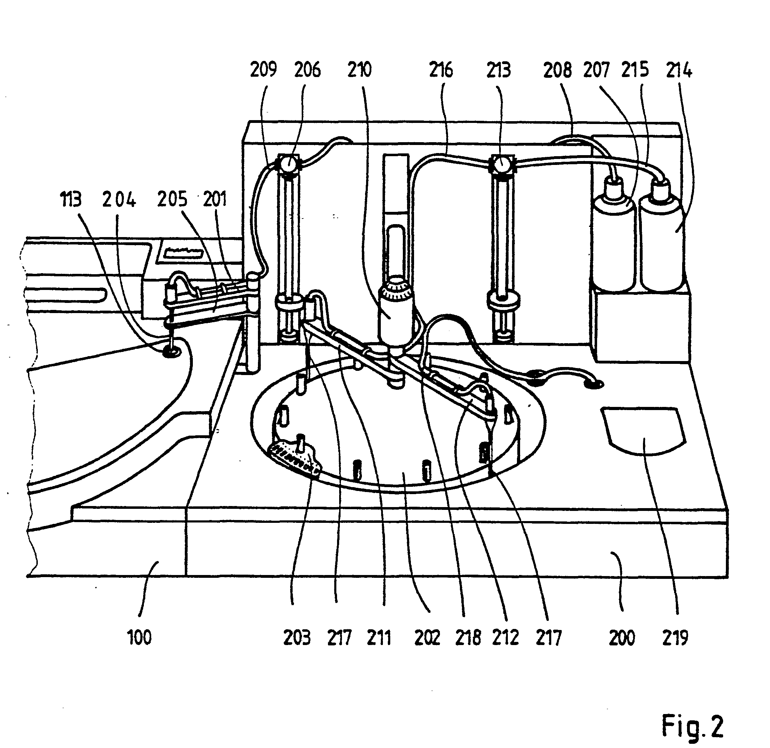

In Figur 2 ist ein Analysatorteil 200 dargestellt, der dem Probenverteiler 100 gemäß Figur 1 benachbart aufgestellt ist. Der Probenverteiler ist in dieser Figur nur zum Teil wiedergegeben.

Es ist ersichtlich, daß Probenverteiler 100 und der Analysatorteil 200 modulartig aufeinander abgestimmt sind, wobei mittels eines Transferarmes 201 in die Entnahmeöffnung 113 für mechanische Entnahme des Probenverteilers 100 eingegriffen und eine Überführung der Probensubstanz in ebenfalls kreisförmig auf einem Teller 202 angeordnete Inkubationsgefäße 203 erfolgen kann. Der Inkubatorteller 202 weist einen geringeren Durchmesser auf als der entsprechende Teller des Probenverteilers, da die Inkubatorgefäße schmaler gehalten sind, zumal die jeweils zu entnehmende Probenteilmenge in der Regel ein geringeres Volumen aufweist als die Gesamtmenge der Probe. Die Inkubationsgefäße ragen über den Rand des Tellers 202 hinaus und tauchen in ein Wasserbad zwecks Temperierung ein.

Bevorzugt wird eine dem Analysator mittels Schwenkarm zugeführte Teilprobe vor dem Ausstoßen in ein Teilprobengefäß mit einer großen thermisch wirksamen Oberfläche des Temperaturbades in einem Wärmeaustauscher ausgesetzt, so daß eine schnelle Temperaturangleichung der Teilprobe erfolgt. Der Analysatorteil ist damit unmittelbar einsatzbereit.

Der Transferarm 201 trägt an seinem Ende eine hohlnadelförmige Kanüle 204, welche durch die Öffnung eines Absaugarms 205 geführt wird, der zur Verringerung des Verschleppungsfehlers eine äußere Reinigung der Kanüle 204 bewirkt. Die Arme 201 und 205 werden jeweils gleichsinnig bewegt, wobei nach jeder Schwenkbewegung und dem Überführen einer Teilprobe ein Weiterrücken des Inkubatortellers 202 um eine Position erfolgt, während der Teller des Probenverteilers dasjenige Probengefäß, welches die nächste Probe enthält, für die der betreffende Test durchzuführen ist, in den Bereich der Öffnung 113 transportiert.

Die Probenentnahme erfolgt durch die Einwirkung eines Kolbendosierers 206, welcher die Dilutoreinheit bildet. Nachdem ein Teil der Probenflüssigkeit angesaugt wurde, wird eine vorgegebene Menge einer ersten Reagenz aus einem Gefäß 207 angesaugt und (durch eine entsprechende Position von nicht dargestellten Steuerventilen) über die Schlauchverbindung 209 und die Hohlnadel 204 zusammen mit der Teilprobe in dasselbe Inkubatorgefäß ausgestoßen. Durch das nachfolgende Ausstoßen der Reagenz werden die Transportwege für die Probe gereinigt (wobei das Ansaugen der Probenflüssigkeit nur bis in den Schlauchbereich und nicht bis in den Dosierer erfolgte), so daß auch durch diese Maßnahme der Verschleppungsfehler klein gehalten wird. Der Kolbendosierer 206 bildet eine handelsübliche Einheit, welche die erforderlichen Dosierungen mit großer Präzision auszuführen in der Lage ist.

Im Zentrum des Inkubatortellers 202 ist eine Trägeranordnung 210 vorgesehen, die mit zwei radialen Tragarmen 211 und 212 verbunden ist, die in verschiedenen relativen Winkelpositionen einstellbar sind. Ein in dem Trägerelement 210 vorgesehener Positionsgeber erfaßt die relative Winkelposition der Arme 211 und 212 und wandelt diese in ein elektrisches Kennungssignal um. Eine Skala ermöglicht eine reproduzierbare Einstellung.

Noch bevor der Transferarm im Drehsinn (gegen die Uhrzeigerrichtung) des Tellers 202 zuerst von den Teilprobengefäßen erreicht wird (Arm 211) wird mittels eines zweiten Kolbendosierers 213 (Dispenser) aus einem weiteren Behälter 214 eine Reagenz in kleiner Menge eingespritzt, welche nach dem Zusetzen der Teilprobe beispielsweise als Startreagenz für die Inkubationsphase dient. Der Reagenzientransport erfolgt dabei durch Schlauchverbindungen 215 und 216.

Der Vorschub des Inkubatortellers um jeweils die Breite eines Inkubatorgefäßes wird durch eine feste Taktsteuerung kontrolliert, die sicherstellt, daß die Inkubatorgefäße pro Zeiteinheit um einen vorgegebenen Betrag voranbewegt werden. Nach Ablauf der Inkubationszeit (bezogen auf das Einfüllen der Teilprobe) erreicht das die betreffende Teilprobe enthaltende Inkubatorgefäß eine an dem Tragarm 211 befindliche Kanüle 217, welche die Entnahme der inkubierten Probe gestattet. Während des Transports des Inkubatortellers 202 wird der Träger 210 mitsamt den Armen 211 und 212 vertikaler Richtung angehoben gehalten, während ein Absenken jeweils erfolgt, wenn der Inkubatorteller in einer erreichten Zielposition verharrt.

Die Organisation des Analysatorteils ist nicht an eine derartige Ausführungsform gebunden. Bevorzugt erfolgt das Überführen von Teilproben « paketweise » in aufeinanderfolgende Teilprobengefäße, welche nach einem der Inkubationszeit entsprechenden Zeitraum und beliebigen zwischenbewegungen des Inkubatortellers wiederum aufeinanderfolgend abgearbeitet werden. Bei dieser Betriebsart kommt insbesondere ein Vorteil der Konzeption des Probenverteilers zum Tragen : Da die Überführung von Teilproben zur automatischen Analyse nur einen verhältnismäßig kleinen Anteil der insgesamt zur Probenverteilung zur Verfügung stehenden Zeit beansprucht, kann in der übrigen Zeit eine manuelle Probenentnahme erfolgen. Bevorzugt werden die Zeiträume der automatischen Entnahme der Bedienungsperson durch eine entsprechende Anzeige rechtzeitig angekündigt, so daß gegebenenfalls bei der manuellen Probenentnahme eine kurze Unterbrechung eingeplant werden kann.

Die Entnahme der nunmehr für den nachfolgenden Test vorbereiteten Teilprobe erfolgt durch Absaugen mittels einer Kanüle 217 am Arm 212 und einer Schlauchverbindung 218 in den Photometerteil, welcher unter einer Abdeckung 219 im Gehäuse des Analysatorteils 200 angeordnet ist.

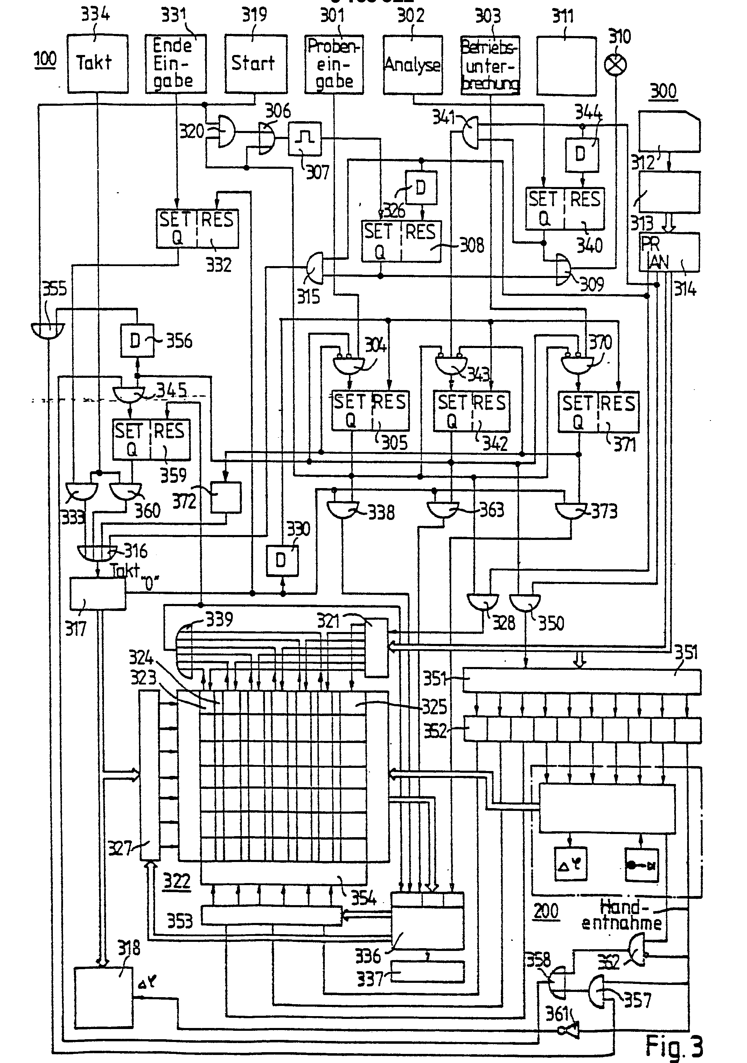

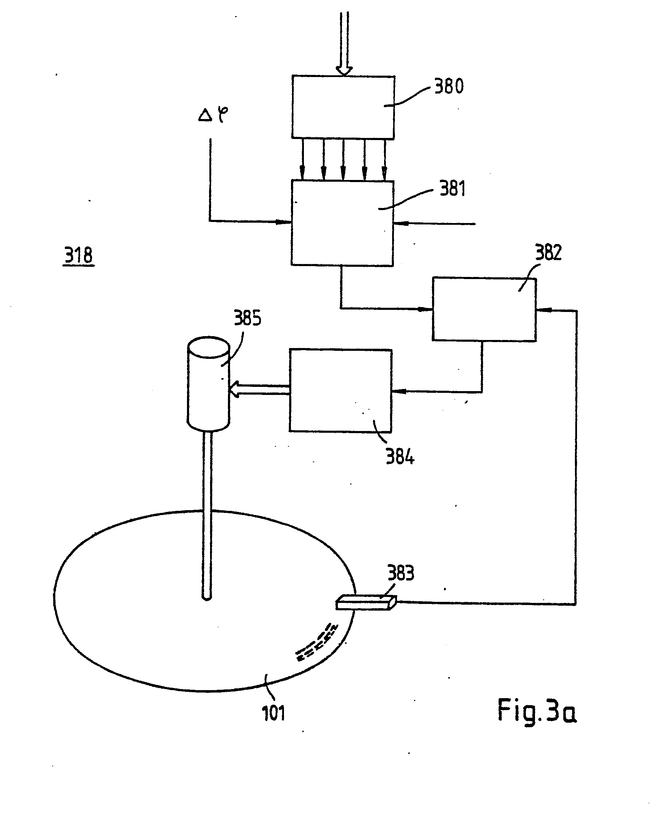

In Figur 3 ist die Steuerschaltung für den Probenverteiler schematisch dargestellt. Die wiedergegebenen Logikelemente sollen lediglich die prinzipielle Funktion andeuten, wobei zur Realisierung mit handelsüblichen Bauelementen eine Reihe von zusätzlichen Bauelementen erforderlich ist, welche Steuer- und Taktfunktionen ausführen, die bei dieser prinzipiellen Darstellung außer Betracht gelassen werden. Bei einer Realisierung mittels Mikroprozessor bilden die Speicher und Zähler Teile des zugehörigen RAMs, wobei die wiedergegebenen Logikelemente durch einen entsprechenden seriellen Programmablauf ersetzt sind, bei dem die erforderlichen logischen Entscheidungen nacheinander getroffen und in Abhängigkeit von den vorgefundenen Bedingungen ausgewertet werden.

Die dargestellten Verbindungen arbeiten mit positiver Logik, d. h. Eingabemittel lösen positive Signale aus, welche bei ihrem Vorhandensein die betreffenden Schaltelemente aktivieren. Bei bistabilen Schaltelementen wird lediglich die Signalvorderflanke ausgewertet.

Einbezogen in die Darstellung ist die Steuerung des Analysatorteils 200, welcher jedoch nicht in Einzelheiten dargestellt ist. Die Steuerung des Analysatorteils beschränkt sich darauf, die für einzelne Analyse anzugebenden Parameter (Filter, Inkubationszeiten, Reagenzien, Mengen, Badtemperatur, etc.) anzugeben, woraufhin dort die entsprechenden Einstellungen vorgenommen werden. Von Bedeutung ist hier lediglich die relative Verstellung von Dilutor- und Dispensearm zur Festlegung der Inkubationszeit sowie der sich daraus ergebende Takt für das Überfüllen von Teilproben vom Probenverteiler her.

Die Bedienung von Probenverteiler und Analysatorteil erfolgt über Bedienungstasten 301 bis 303, mit denen jeweils eine von unterschiedlichen Betriebsfunktionen auswählbar ist. Die übrige Dateneingabe und die Festlegung der Analysenparameter erfolgt mittels Programmkarten in Form von Markierungskarten.

Auf eine Betätigung der Taste 301 hin wird damit der Betriebszustand « Probeneingabe » ausgelöst. Über diese Taste wird unter des Voraussetzung, daß gegenwärtig kein anderer Betriebszustand ausgeführt wird, über ein UND-Gatter 304 ein Flip-Flop 305 gesetzt. Wenn einer der anderen Betriebszustände aktiviert wäre, würde über einen der invertierenden Eingänge das UND-Gatter 304 gesperrt und damit die Betätigung der Taste 301 wirkungslos gemacht werden.

Durch das Setzen des Flip-Flops 305 wird die Eingabe des ersten Probengefäßes mit den zugehörigen Patientendaten angefordert. Dazu gelangt das Ausgangssignal des gesetzten Flip-Flops 305 zu einem ODER-Gatter 306 und einem Impulsformer 307, welcher aus der Vorderflanke des Ausgangssignals des Flip-Flops 305 einen kurzzeitigen Impuls erzeugt, der zu einem weiteren Flip-Flop 308 gelangt, welches daraufhin ebenfalls in seinen gesetzten Zustand überführt wird. Durch das Setzen dieses Flip-Flops 308 wird über ein ODER-Gatter 309 eine Anzeige 310 zum Aufleuchten gebracht, welche dem Kartenleser zugeordnet ist und bei diesem Betriebszustand zur Eingabe eines Satzes von Patientendaten für die erste Probe auffordert. Diese Aufforderung kann entsprechend in Form einer alphanumerischen Mitteilung vorgenommen werden, was über das Anzeigefeld 311 erfolgen würde, das in dem vorliegenden Prinzipbild ohne Verdrahtung wiedergegeben ist. Das Anzeigefeld 311 dient — insbesondere bei einer durch einen Mikroprozessor gesteuerten Ausführung — zur Bedienerführung und zur Ausgabe von Statusmeldungen. Die dazu notwendigen Schaltungen und Programmbefehle können jedoch aus den hier beschriebenen Programmzuständen ohne weiteres hergeleitet und zum Auslösen der Darstellung von alphanumerischen Mitteilungen herangezogen werden.

Wird jetzt durch die Bedienungsperson eine Markierungskarte 312 in einen Kartenleser 313 eingegeben, so wird das darauf enthaltene Signal einem Decoder 314 zugeführt. Zu jeder Probe ist es erforderlich, einen Datenträger zuzuführen, der Angaben darüber enthält, welche von einer Anzahl möglicher Tests für die jeweils vorliegende Probe — in der Regel eine Untersuchung des Bluts eines Patienten — vorgenommen werden soll. Der Programmträger enthält dazu eine zusätzliche Kennung, welche die Vorrichtung in den Zustand zur Eingabe von Patientendaten setzt. Weiterhin enthalten die Daten ein Signalbit, welches in der Probenverteileranordnung der nachfolgenden Analyseneinheit die eingegebenen Daten als Testdaten für ein Bezugsserum (Testserum) ausweist.

Ist die Eingabe einer richtigen, Patientendaten enthaltenden Karte erkannt worden, so gibt der Decoder 314 über eine Ausgangsleitung, welche das Erkennen der Daten als Patientendaten anzeigt, ein Ausgangssignal an ein UND-Gatter 315 ab, welches bei gesetztem Flip-Flop 308 dieses Signal an ein ODER-Gatter 316 weiterleitet. Das Ausgangssignal des ODER-Gatters 316 bildet ein Taktsignal zum Heraufsetzen eines Zählers 317, dessen Zustand die Nummer des Probengefäßes kennzeichnet, welches sich im Bereich der manuell erreichbaren Öffnung des Probenverteilers befindet. Das Ausgangssignal des Zählers 317 gelangt zum Tellerantrieb 318 und löst dort eine entsprechende Einstellung des Probenverteilertellers aus, der beispielsweise durch einen Schrittmotor angetrieben wird. (Einzelheiten der Schaltung dieses Blocks werden noch weiter unten angegeben.)

Über das mittels eines Verzögerungsglieds 326 verzögertes Quittungssignal des Decoders 314 wird das Flip-Flop 308 zurückgesetzt, so daß die Anzeige 310 erlischt.

Die Bedienungsperson wird — gegebenenfalls durch einen entsprechenden Hinweis in dem Anzeigefeld 311 — dazu aufgefordert, ein Probengefäß mit dem Serum des ersten Patienten in die entsprechende der Eingabeöffnung zugeordnete Aussparung des Probenverteilertellers einzugeben. Die Handlung wird unter anderem auch dadurch für die Bedienungsperson zwangsläufig, weil die Probengefäße derart ausgebildet sind, daß sie im Bereich des Probenverteilers und des Analysators lediglich in der vorgesehenen Aussparung abgestellt werden können. Eine Aufbewahrung an anderen Orten ist ohne zusätzliche Hilfsmittel nicht möglich.

Nach dem ordnungsgemäßen Positionieren des ersten Probengefäßes wird dieser Zustand dem Gerät durch Betätigung einer Starttaste 319 mitgeteilt. Die Betätigung der Starttaste 319 wird mittels eines UND-Gatters 320 vom gesetzten Zustand des Flip-Flops 305, d. h. von der laufenden Funktion der Probeneingabe abhängig gemacht. Das Ausgangssignal des UND-Gatters 320 gelangt zu dem ODER-Gatter 306 und veranlaßt dort denselben Funktionsablauf, wie er nach dem Setzen des Flip-Flops 305 für die Eingabe der ersten Probe ausgelöst wurde. Es wirde also erneut eine Patientenkarte angefordert und nach Erkennen des korrekten Inhalts der Karte der Zähler 317 um eine Position vorangesetzt.

Die die auszuführenden Tests bzw. Analysen betreffenden Daten werden vom Decoder 314 entziffert und an einen Datenumsetzer 321 weitergegeben. (Über ein UND-Gatter 328 wird diese Dateneingabe freigegeben, wenn sowohl die Eingabe von « Probendaten » erkannt als auch der entsprechende Betriebszustand eingeschaltet (Flip-Flop 305 gesetzt) ist. Die Ausgangssignale dieses Dtenumsetzers, welche einzelne Bits darstellen, die die Ausführung eines bestimmten Tests kennzeichnen, gelangen zu einem Speicher 322, der nach Art einer Matrix organisiert ist, d. h.

in Zeilen und Spalten die für den Betrieb des Probenverteilers relevanten Daten aufnimmt. (Die dargestellte Organisation bezieht sich nicht auf die geometrische Anordnung, sondern lediglich auf die Art der Adressierung, welche zweidimensional erfolgt.) In den zeilen der Matrix werden jeweils die für einen Patienten maßgeblichen Daten abgespeichert. Jede Speicherzelle der Matrix umfaßt dabei einerseits eine Information darüber, ob ein betreffender Test (Spalten der Matrix) ausgeführt werden soll (beispielsweise Speicherzelle 323 für einen ersten Test) und weiterhin Speicherraum für das Testergebnis selbst (Speicherzelle 324).

Zusätzlich enthält jede Zeile des Speichers eine weitere Speicherzelle 325, welche die betreffenden Daten als Bestandteil eines Testserums kennzeichnen, so daß hier ein entsprechender Ausdruck oder aber ein Vergleich mit Soll-Daten und gegebenenfalls eine entsprechende Fehlerkennzeichnung erfolgen kann.

Die Adressierung der einzelnen Zeilen des matrisartigen Speichers erfolgt durch einen Zeilendecoder 327, welcher vom Stand des Zählers 317 angesteuert wird. Damit ist einer jeden Position des Probenverteilertellers und damit jeder Probe eine Zeile des Speichers zugeordnet. (In der Zeichnung ist aus Vereinfachungsgründen lediglich eine verminderte Anzahl dargestellt — was entsprechend auch für die Anzahl der Spalten gilt.)

Ist der Teller des Probenverteilers vollständig mit Proben angefüllt, so erreicht der Zähler 317 wieder seine Ausgangsposition, was durch ein Signal « Null » gekennzeichnet wird, welches über ein Verzögerungsglied 330 unter anderem dem Rücksetzeingang des Flip-Flops 305 zugeführt wird, welches damit in seinen Ausgangszustand zurückgesetzt wird, so daß die Anwahl anderer Betriebszustände über eine der Eingabetasten mögliche wird.

Sollte die Anzahl der einzugebenden Probengefäße nicht der Anzahl der vorgesehenen Aussparungen im Probenverteilerteller entsprechen, so wird nach Eingabe des letzten Gefäßes durch Betätigen einer Taste 331 « Eingabe Ende » ein Flip-Flop 332 gesetzt, dessen Ausgangssignal zu einem UND-Gatter 333 gelangt. Zum anderen Eingang dieses UND-Gatters 333 wird das Ausgangssignal eines Taktgenerators 334 geführt, dessen Taktimpulse schneller Frequenz vom Ausgang des Gatters 333 über ein ODER-Gatter 316 zum Takteigang des Zählers 317 übertragen werden, woraufhin der Tellerantrieb 318 im Schnellgang vorangeführt wird bis durch das Ausgangssignal « Null » des Zählers 317 das Flip-Flop 332 zurückgesetzt wird, weil der Zähler 317 — und damit der Tellerantrieb 318 seine Ausgangsposition erreicht haben.

Nach Beendigung der Probeneingabe erfolgt mit dem verzögerten Rücksetzsignal für das Flip-Flop 305 (Ausgangssignal « Null ») des Zählers 317 bei noch gesetztem Flip-Flop 305 (Verknüpfung über UND-Gatter 338/335) die Aktivierung eines Druckersteuerbausteins 336, welcher seinerseits einen Drucker 337 zu einem Protokollausdruck über die Anzahl der insgesamt pro Analyse angeforderten Tests veranlaßt.

Durch die Aktivierung mit dem unverzögerten Ausgangssignal « Null » des Zählers 317 bei noch gesetztem Flip-Flop 305 (UND-Gatter 338) wird über einen entsprechenden Eingang der Druckersteuerung bei dieser ein Zyklus ausgelöst, welcher bei aufeinanderfolgender spaltenweiser Adressierung der einzelnen Zeilenspeichers 322 die Ausgangssignale der Speicherzelle 323 (und der entsprechenden den Ausführungsbefehl für einen betreffenden Test für eine Probe festhaltenden Speicherzellen) ein ODER-Gatter 339 zu einem Signal geformt, welches ebenfalls über die Druckersteuerung 336 zugeführt wird. Aufgrund der erhaltenen Signale wird durch die Druckersteuerung 336 die Anzahl jeweils in einer Spalte erhaltenen binären « Eins »-Signale addiert und der entsprechende Wert ausgedruckt, so daß in einer Tabelle nacheinander ersichtlich wird, wieviele Proben ein Test jeweils auszuführen ist. Diese Angaben sind für die Bedienungsperson insofern von Bedeutung, als daß daraufhin die Entscheidung gefällt werden kann, ob es lohnend ist, diesen automatisiert mittels der Analyseneinheit auszuführen, oder aber es rationeller ist, wegen der geringen Zahl entsprechender Tests diese kurzfristig manuell vorzunehmen. Dieses ist bei Blutuntersuchungen beispielsweise bei Bestimmungen sinnvoll, welche den Nachweis von Eisen zum Gegenstand haben.

Es ist einer der Hauptvorteile des hier dargestellten Geräts, daß die Entscheidung, ob ein Test manuell oder automatisiert durchgeführt werden soll, äußerst flexibel handhabbar ist und den jeweiligen Erfordernissen in der Ausführung optimal entsprechen kann.

Nach erfolgter Probeneingabe kann nunmehr mit der Analysenausführung begonnen werden. Dabei kann in beliebiger Reihenfolge vorgegangen werden. Diese Reihenfolge bestimmt sich ausschließlich aus Zweckmäßigkeits- und Handhabungserwägungen.

Zum Aktivieren der Analysenfunktion wird die Taste 302 betätigt, welche ein Setzen des Flip-Flops 340 auslöst. Dadurch wird über das UND-Gatter 309 — entsprechend wie bei der Eingabe der Patientendaten — das Eingeben einer Markierungskarte über den Kartenleser 313 gefordert. Wurde diese Dateneingabe vorgenommen und vom Decoder 314 eine Kennzeichnung erkannt, welche die Karte als Träger von Analysendaten (Testparametern) ausweist, so wird über ein UND-Gatter 341 bei noch gesetztem Flip-Flop 340 das Flip-Flop 342 über ein UND-Gatter 343 gesetzt, um diesen Betriebszustand festzuhalten. Das UND-Gatter 343 wird über seine invertierenden Eingänge — entsprechend dem Setzeingang des Flip-Flops 342 — gesperrt, wenn bereits ein anderer Betriebszustand gestellt wurde, welcher noch nicht abgeschlossen ist. Über das Verzögerungsglied 344 wird anschließend das Flip-Flop 340 zurückgesetzt und damit die Anforderung der Datenträgereingabe beendet.

Durch das Ausgangssignal des Flip-Flops 342 wird weiterhin ein UND-Gatter 345 aktiviert, welches an seinem anderen Eingang dann ein Signal erhält, wenn ein Probengefäß zur Entnahme einer Probe in die entsprechende Position geführt werden soll. Für die dazu erforderliche Steuerung ist es erforderlich, festzustellen, für welche der Probengefäße eine Entnahme für die vorzunehmende Analyse bzw. den vorzunehmenden Test erfolgen muß, und ob die Entnahme durch den Analysatorteil automatisch oder per Hand erfolgen wird. Mit dem Eingeben der für die auszuführende Analyse kennzeichnenden Karte wurden die für diesen Test relevanten Daten, gesteuert durch das UND-Gatter 350, welches einerseits durch das Ausgangssignal des Flip-Flops 342 und andererseits durch das das Erkennen einer Analysekarte kennzeichnende Ausgangssignal des Decoders 314 aktiviert wird, über einen Analysedatendecoder 351 in einen Analysedatenspeicher 352 überführt. Die ersten drei Speicherzellen (in der Figur links) des Analysedatenspeichers 352 kennzeichnen eine interne Nummer für die betreffende Analyse, die den Spaltendecoder 353 ansteuert und mittels eines Spaltenadressierers 354 festlegt, welchen « Probenspeicherplätzen » im Speicher 322 eine Information zugeführt wird. Die Codebezeichnung der betreffenden Analyse identifiziert im Speicher 322 diejenige Spalte, für die bei den zu den Proben gehörigen Daten jeweils das Ausführen der betreffenden Analyse gekennzeichnet ist. Durch die im Analysedatenspeicher festgehaltenen Informationen wird beim Verteilen der Teilproben für diesen Test also eine der Spalten des Speichers 322 adressiert, so daß die dort enthaltenen Daten dem direkten Zugriff zugänglich sind.

Eine der auf dem die betreffende Analyse kennzeichnenden Datenträger festgehaltene Codierung legt fest, ob die Analyse von Hand oder automatisch ausgeführt werden soll, wobei die geeignete Auswahl der betreffenden Karte durch die Bedienungsperson vorgenommen wird. Soll die Ausführung von Hand vorgenommen werden, so entfallen weitere Daten zur Ansteuerung des Analysenteils 200 (die den Handbetrieb kennzeichnende Datenleitung ist in der Zeichnung rechts außen dargestellt).

Diejenigen Fälle, bei denen die Analyse durch den Analysatorteil 200 vorgenommen wird, sind im Analysedatenspeicher die zur Ausführung notwendigen Parameter in Form von Datenwerten festgehalten, welche der Beeinflussung des Steuerteils 353 des Analysenteils dienen. Bei einer weiteren Ausführung der Erfindung ist die Kennzeichnung der Ausführung durch Handbetrieb auf dem die Analysenparameter enthaltende Informationsträger nicht erforderlich, falls nämlich die Auswertung in der Weise erfolgt, daß das Fehlen sämtlicher Parameterdaten als Ausführung von Hand interpretiert wird. Der Analysensteuerteil enthält neben den Vorrichtungen zur Einstellung der Analyseparameter auch die notwendigen Kontrollmittel, welche die Analysendurchführung betreffen, wie Kontrolle der Inkubationsstrecke 377 und Überwachung der Photometerstrecke, beispielsweise durch optische Kontrollen 378.

Anschließend soll nun mit der Beschreibung der Steuerung zur Entnahme der Teilproben fortgefahren werden :

Das weitere dem UND-Gatter 345 zugeführte Signal wird nun — je nachdem ob die Analyse von Hand oder durch den Analysenteil automatisch ausgeführt — entweder ausgelöst von dem Bediener oder aber vom Analysatorteil erzeugt. Bei Handbetrieb verläuft der Signalweg für das Positionieren des Tellers des Probenverteilers für die erste Teilprobenentnahme folgendermaßen : Das Setzen des Flip-Flops 342 gelangt zu einem Verzögerungsglied 356 und anschließend zu einem ODER-Gatter 355, dessen Ausgangssignal einem UND-Gatter 357 zugeführt wird, an dessen weiterem Eingang das den Handbetrieb kennzeichnende Ausgangssignal des Analysedatendecoders 351 anliegt, so daß es durchgeschaltet ist und sein Ausgangssignal an ein ODER-Gatter 358 weitergibt.

Das Ausgangssignal dieses ODER-Gatters wird dem weiteren Eingang des UND-Gatters 345 zugeführt, welches ein Flip-Flop 359 setzt. Durch das Ausgangssignal des gesetzten Flip-Flops 359 wird ein Eingang eines UND-Gatters 360 aktiviert, dessen weiterem Eingang Taktimpulse des Taktgenerators 334 zugeführt werden und dessen Ausgang mit dem ODER-Gatter 316 verbunden ist. Die Taktimpulse gelangen nunmehr in schneller Folge an den Zähler 317, welcher den Zeilendecoder mit dem Zeilenadressierer des Speichers 322 solange heraufsetzt und das aufeinanderfolgende Ansteuern der einzelnen Zeilen einer Spalte des matrixartig aufgebauten Speichers 322 veranlaßt, bis nun das Ausführen der Analyse kennzeichnenden Speicherplätze ausführen des betreffenden Tests kennzeichnet. Dieses Signal gelangt über das ODER-Gatter 339, (nur die Signale der adressierten Spalte werden ausgelesen) zum Rücksetzeingang des Flip-Flops 359, welches daraufhin zurückgesetzt wird und das weitere Heraufsetzen des Zählers 317 unterbricht. Der Tellerantrieb 318 folgt dem Zähler 317 und stellt den Probenverteiler zur Entnahme entsprechend ein. Der Zugriff zu dem betreffenden Probengefäß ist über die vordere Öffnung erreichbar.

Erfolgt die Überführung der Teilprobe jedoch mechanisch, so ist die Kennzeichnung « Handbetrieb » des Analysendatenspeichers 352 inaktiv. Dieser Zustand wird über einen Inverter 361 in einen positiven Signalzustand umgeformt und das Ausgangssignal dem Steuerteil für den Tellerantrieb 318 über einen separaten Eingang geführt. Die Aktivierung dieses Eingangs bewirkt ein Verstellen des Tellerantriebs und einen vorbestimmten Winkel, so daß die Teilprobenentnahme aus dem gewünschten Probengefäß über die seitliche Öffnung zur mechanischen Probenentnahme erfolgen kann. Auf das betreffende Signal hin wird also das der Antriebssteuerung für den Probenverteilerteller zugeführte Ausgangssignal des Zählers 317 um einen vorbestimmten Betrag herauf- oder herabgesetzt, so daß die Einstellung mit der gewünschten Winkeländerung erfolgt.

Im Betrieb mit Handentnahme wird nach Abfüllen der Teilprobenmenge die Starttaste 319 betätigt, welche über das ODER-Gatter einen entsprechenden Signalzyklus auslöst, welcher zum Aufsuchen des nächsten Probengefäßes führt, bis das Ausgeben des Signals « Null » anzeigt, daß der Zähler 317 seinen Endzustand erreicht und damit alle Probengefäße zur Teilprobenentnahme erfaßt worden sind.

Im Falle der automatischen Analysenausführung folgt das Weiterbewegen des Probenverteilertellers zur nächsten Teilprobenentnahme in Synchronisation mit dem Analysatorteil, da dessen Taktfolge die einzuhaltenden Inkubationszeiten festliegen, bis ebenfalls eine vollständige Abarbeitung erfolgt ist.

Ist der Betriebszustand « Handentnahme » nicht aktiviert, so wird das UND-Gatter 362 über seinen invertierenden Eingang für vom Analysentaktausgang des Steuerteils des Analysatorteils an seinen anderen Eingang gelangende Signale freigegeben, welche an das ODER-Gatter 358 gelangen und in entsprechender Weise eine Weiterschaltung des Probenverteilertellers ohne manuelle Einwirkung veranlassen.

Das Erreichen der Endposition des Verteiltellers und die entsprechende Ausgabe des Signals « Null » von Zähler 317 bewirkt vor dem Rücksetzen des Flip-Flops 342 über das Verzögerungsglied 330 eine Druckerfunktion. Zwar wird über ein UND-Gatter 363 ein weiterer Eingang der Druckersteuerung 336 in der Weise aktiviert, daß im Falle der Probenverteilung von Hand eine Liste der Proben ausgedruckt wird, der die entnommene Teilprobenmenge angehört, wobei noch nähere Daten für den auszuführenden Test sowie Leerstellen für die einzutragenden Daten vorgesehen sein können.

Auch für die automatisch durchgeführten Analysen wird mit dem Fortgang der Analyse eine Arbeitsplatzliste ausgedruckt, welche fortlaufend die für die einzelnen Proben ermittelten Analysenergebnisse angibt, wobei die dazu erforderlichen Steuerungen nicht im einzelnen wiedergegeben sind.

Soll die Analysentätigkeit unterbrochen werden, bevor alle Tests für die im Probenverteiler vorhandenen Proben abgearbeitet sind, so besteht die Möglichkeit, nach Durchlauf des Probenverteilertellers die Ausgangsstellung die Taste « Betriebsunterbrechung » 303 zu betätigen, welche mittels eines UND-Gatters 370 nur dann ein Flip-Flop 371 setzt, wenn die beiden Flip-Flops 305 sowie 342 zurückgesetzt sind, also keine Probeneingabe und keine Probenverteilung zur Analyse stattfindet.

Durch Setzten des Flip-Flops 371 gelangt ein Ausgangssignal an einen Pulssequenzgeber 372, welcher über das ODER-Gatter 316 den Zähler 317 in einer derartigen Folge taktet, daß bei geöffneter Abdeckung die Segmentträger leicht entnehmbar sind und für die Zeit einer längeren Arbeitsunterbrechung in einem thermostatisierten Schrank verwahrt werden können. Bevorzugt erfolgt — bei entsprechend bemessener, durch die Abdeckung freigegebener Öffnung — eine Drehung des Tellers um zweimal 180°.

Nach Durchlauf eines vollständigen Tellerumlaufs, wird durch das Signal « Null » des Zählers 317 das Flip-Flop 371 entsprechend zurückgesetzt und über ein UND-Gatter 373 durch den Rücksetzimpuls bei noch gesetztem Flip-Flop 371 ein dritter Bereich der Druckersteuerung 336 adressiert, welche eine Liste der noch auszuführenden Tests erstellt, wobei unterstellt wird, daß im matrixartigen Speicher 322 pro Spalte eine Kennung vorhanden ist, welche die nach der Probeneingabe bereits zur Probenverteilung adressierten Spalten kennzeichnet.

Nach Durchführung aller Tests, d. h. wenn alle Spalten als einmal adressiert gekennzeichnet sind, erfolgt durch die Druckersteuerung 336 ein Ausdrucken der in dem matrixartigen Speicher in den dem Speicherplatz 324 entsprechenden Plätzen enthaltenen Informationen über die Testergebnisse. Dabei werden die Ergebnisse jeweils für eine Probe untereinander ausgedruckt. Bei Testseren wird ein entsprechender Hinweis auf Grund der in den Speicherplätzen 325 enthaltenen Kennzeichnung ausgedruckt, so daß die Bedienungsperson die Genauigkeit der übrigen Analysenergebnisse beurteilen kann.

In Figur 3a ist ein Ausführungsbeispiel einer Steuerungsanordnung für den Antrieb des Probenverteilertellers 101 im Prinzip dargestellt. Der Stand des Zählers 317 gelangt zu einem Decoder 380 und wird dort in ein binäres Signal umgewandelt, dessen einzelne Stellen an eine Addierschaltung 381 übertragen werden, von der vorzugsweise ein Bit durch ein von außen zugeführtes Signal $\Delta\varphi$ veränderbar ist. Dieses Bit ist in seiner binären Position so gewählt, daß ein Umsetzen jeweils eine Veränderung des Zählerstands bewirkt, der zu einer Drehung des Zählers um einen Winkel gehört, welcher erforderlich ist, ein Probengefäß von der Position « Handentnahme » in die Position « Automatisierte Entnahme » zu überführen. Während die normale Position auf die Probenentnahme per Handbetrieb eingestellt ist, wird die geänderte Position bei automatisierter Probenverteilung (Ausgangssignal « Handbetrieb » invertiert) eingestellt. Das Ausgangssignal der Schaltung 381 wird einer Summierschaltung 382 zugeführt, an deren anderen Eingang das Ausgangssignal eines Positionsabtasters 383 gelangt. Diese beiden Signale werden miteinander verglichen und — wenn eine Positionsabweichung ermittelt wird — erfolgt die Abgabe eines entsprechenden Korrektursignals an eine Treiberschaltung 384 für den Antriebsmotor 385 des Probenverteilertellers. Der Probenverteilerteller 101 weist auf seinem Rand eine geeignete Codierung auf, welche der Lesevorrichtung 383 das Erkennen der aktuellen Position ermöglicht. Derartige Codierungen können optischer oder mechanischer Art sein. (Die Elemente 382 und 383 können auch gegebenenfalls entfallen, wenn nämlich als Antriebsmotor 385 ein Schrittmotor Verwendung findet, der impulsweise angesteuert wird und jeweils in Abhängigkeit von der Zahl der übermittelten Impulse schrittweise Winkelbewegungen in den entsprechenden Richtungen ausführt.)

**Patentansprüche**

1. Probenverteilungsvorrichtung mit einem Probenverteiler (100) von im wesentlichen rechteckigen Grundriß, einem beweglichen, mechanisch angetriebenen Träger (102) für eine Anzahl von Probenbehältern (103), einer ersten Öffnung (110) in einer Abdeckung (109) des Probenverteilers (100), die ein manuelles Zuführen eines einzelnen Probenbehälters sowie eine Probenentnahme aus dem Probenbehälter erlaubt, und einem insbesondere getrennten Analysatorteil (200), gekennzeichnet durch mindestens eine weitere Öffnung (113) in der Abdeckung (109) zur ausschließlich mechanischen Probenentnahme, deren Querschnitt kleiner ausgebildet ist als der Querschnitt der ersten Öffnung (110), insbesondere aber kleiner als der Querschnitt der einzelnen Probenbehälter (103), wobei die erste Öffnung (110) im Bereich der Frontseite des Probenverteilers (100) und die weitere Öffnung (113) zur ausschließlich mechanischen Probenentnahme im Bereich einer Seitenfläche des Probenverteilers (100) angeordnet ist.

2. Probenverteilungsvorrichtung nach Anspruch 1, dadurch gekennzeichnet, daß eine Steuervorrichtung vorgesehen ist, welche in Abhängigkeit von einer Information, die gegebenenfalls gleichzeitig die Betriebsfunktion zum Entnehmen von Proben aus einer Teilmenge der Probenbehälter (103) durch den Analysatorteil (200) auslöst, ein aufeinanderfolgendes Positionieren der entsprechenden Probenbehälter in jeweils eine der einer der Öffnungen zugeordneten Probeentnahmepositionen veranlaßt.

3. Probenverteilungsvorrichtung nach Anspruch 2, dadurch gekennzeichnet, daß mindestens ein Speicher für Analysedaten vorgesehen ist, welcher im Zusammenhang mit den eine Analyse bestimmenden Parametern einen Speicherplatz aufweist, dessen Inhalt festlegt, in welcher von den verschiedenen, jeweils einer der Öffnungen zugeordneten Positionen die Probenentnahme für die betreffende Analyse erfolgt, wobei im Falle der Probenentnahme bei der weiteren Öffnung (113) die Ansteuerung des Analysatorteils (200) ebenfalls durch die Analysedaten erfolgt.

4. Probenverteilungsvorrichtung nach einem der vorangehenden Ansprüche, dadurch gekennzeichnet, daß Schaltmittel (384) vorgesehen sind, welche nacheinander die zur Aufnahme von Probenbehältern vorgesehenen Positionen in den Bereich der ersten Öffnung gelangen lassen.

5. Probenverteilungsvorrichtung nach einem der vorangehenden Ansprüche, dadurch gekennzeichnet, daß die Eingabe der eine zu analysierende Substanz einer Probe kennzeichnenden Daten mittels eines Datenträgers (312) erfolgt, der bezüglich seiner technischen Ausgestaltung einem Datenträger zur Eingabe der Analysedaten weitgehend entspricht, wobei nur ein einziges Lesegerät (313) für beide Arten von Datenträgern vorgesehen ist.

6. Probenverteilungsvorrichtung nach einem der vorangehenden Ansprüche, dadurch gekennzeichnet, daß die Probenbehälter (103) an zwei einander gegenüberliegenden Schmalseiten ein Griffraster (124) aufweisen, das durch eine entsprechende Öffnung der Abdeckung des Probenverteilers in seiner Position zur manuellen Zuführung mit zwei Fingern erreichbar ist.

7. Probenverteilungsvorrichtung nach einem der vorangehenden Ansprüche, dadurch gekennzeichnet, daß die Probenbehälter (103) durch Boden- und/oder Querschnittsgestaltung derart ausgebildet sind, daß sie nicht auf ebener Fläche stehen bzw. nicht in einen üblichen Reagenzglasständer mit runden Öffnungen einsetzbar sind.

8. Probenverteilungsvorrichtung nach einem der vorangehenden Ansprüche, gekennzeichnet durch eine Betriebsart, bei der nacheinander jeweils eine Anzahl von Probenbehältern aufweisende Trägerelemente in einen durch Entfernen oder öffnen einer Teilverkleidung des Gehäuses erweiterten Entnahmebereich gelangen.

9. Probenverteilungsvorrichtung nach einem der Ansprüche 2 bis 8, dadurch gekennzeichnet, daß die Steuervorrichtung einen nach Art einer Matrix organisierten Speicher (322) aufweist, in dessen « Zeilen » für jeden der Probenbehälter eine Anzahl von Speicherplätzen adressierbar ist, die jeweils eine Information aufnehmen, welche die durchzuführende Analyse, und damit die Probenentnahmeposition für den jeweiligen Probenbehälter, bezeichnet, wobei jedem derartigen Speicherplatz ein weiterer zugeordnet ist, der das dem jeweiligen Probenbehälter zugeordnete Analysenergebnis aufnimmt, und daß die zu gleichartigen Analysen gehörigen Speicherplätze « spaltenweise » adressierbar sind.

10. Probenverteilungsvorrichtung nach Anspruch 9 dadurch gekennzeichnet, daß eine Datenausgabevorrichtung vorgesehen ist, welche gesteuert durch den nach Art einer Matrix organisierten Speicher (322), nach Beendigung der Eingabe der Probenbehälter und der zugehörigen Daten durch spaltenweise Zusammenfassung die Teilmenge von Probenbehältern bezeichnet, für die jeweils eine vorbestimmte Analyse auszuführen ist.

**Claims**

1. A sample distributing apparatus having a sample distributor (100) with a substantially rectangular layout, a movable, mechanically driven carrier (102) for a plurality of sample containers (103), a first aperture (110) in a cover (109) of the sample distributor (100) which permits a manual delivery of a single sample container and the taking of a sample from the sample container, and an analyzer section (200) particularly a separate analyzer section, characterised by at least one further aperture (113) in the cover (109) exclusively for the mechanical taking of samples, the cross-section of which aperture is made smaller than the cross-section of the first aperture (110) but in particular smaller than the cross-section of the individual sample containers (103), the first aperture (110) being disposed in the region of the front of the sample distributor (100) and the further aperture (113) exclusively for the mechanical taking of samples being disposed in the region of a lateral face of the sample distributor (100).

2. A sample distributing apparatus as claimed in Claim 1, characterised in that a control device is provided which, depending on information which possibly simultaneously starts the operating function for the taking of samples from some of the sample containers (103) by the analyzer section, causes a consecutive positioning of the corresponding sample containers, each time in one of the sample-taking positions associated with one of the apertures.

3. A sample distributing apparatus as claimed in Claim 2, characterised in that at least one store is provided for analysis data, which store, in connection with the parameters determining an analysis, comprises a store location, the contents of which determine in which of the various positions, each associated with one of the apertures, the taking of a sample for the analysis in question is effected and, if the sample is taken at the further aperture (113), the actuation of the analyzer section (200) is likewise effected by the analysis data.

4. A sample distributing apparatus as claimed in any one of the preceding Claims, characterised in that circuit elements (384) are provided which allow the positions provided for the reception of sample containers to come successively into the region of the first aperture.

5. A sample distributing apparatus as claimed in any one of the preceding Claims characterised in that the input of the data characterising a substance of a sample to be analyzed is effected by means of a data carrier (312) which largely corresponds, with regard to its technical formation, to a data carrier for the input of the analysis data and only a single reading device (313) is provided for both types of data carrier.

6. A sample distributing apparatus as claimed in any one of the preceding Claims, characterised in that the sample containers (103) comprise, at two narrow sides situated opposite one another, a gripping pattern (124) which can be reached by two fingers, through a corresponding aperture in the cover of the sample distributor, in its position for manual delivery.

7. A sample distributing apparatus as claimed in any one of the preceding Claims, characterised in that the sample containers (103) are so constructed, by bottom and/or cross-section formation, that they will not stand on a plane surface and cannot be inserted in a conventional test-tube stand with round apertures.

8. A sample distributing apparatus as claimed in any one of the preceding Claims, characterised by a mode of operation wherein carrier elements, each having a plurality of sample containers, arrive in succession, in a removal region enlarged by removal or opening of a component casing of the housing.

9. A sample distributing apparatus as claimed in any one of Claims 2 to 8, characterised in that the control device comprises a store (322) organized in the manner of a matrix, in the « lines » of which, a plurality of store locations can be addresses for each of the sample containers, each of which locations receives information which indicates the analysis to be carried out and hence the sample-taking position for the particular sample container, and associated with each such store location is a further one which receives the analysis result associated with the particular sample container and that the store locations belonging to similar analyses can be addressed « in columns ».

10. A sample distributing apparatus as claimed in Claim 9, characterised in that a data output device is provided which, controlled by the store (322) organized in the manner of a matrix, after termination of the input of the sample containers and the associated data, indicates, by column-wise combination, the subset of sample containers for which a predetermined analysis is to be carried out in each case.

**Revendications**

1. Appareil de distribution d'échantillons, comprenant un distributeur d'échantillons (100) ayant une forme essentiellement rectangulaire en projection horizontale, un support mobile (102), entraîné mécaniquement, pour un certain nombre de récipients d'échantillons (103), une première ouverture (110) située dans un recouvrement (109) du distributeur d'échantillons (100) et permettant l'amenée manuelle d'un seul récipient d'échantillon, de même qu'un enlèvement d'échantillon du récipient d'échantillon, et une partie, en particulier une partie séparée, formant un analyseur (200), caractérisé par au moins une ouverture supplémentaire (113) prévue dans le recouvrement (109) est destinée exclusivement au prélèvement mécanique d'échantillons, dont la section est plus petite que celle de la première ouverture (110) et en particulier plus petite que la section des récipients d'échantillons (103) individuels, la première ouverture (110) étant disposée dans la zone du côté frontal du distributeur d'échantillons (100) et l'ouverture supplémentaire (113) pour le prélèvement mécanique étant disposée dans la zone d'une face latérale du distributeur (100).

2. Appareil selon la revendication 1, caractérisé en ce qu'il comporte un dispositif de commande qui, en fonction d'une information, produit le positionnement successif des récipients d'échantillons correspondants à une position de prélèvement d'échantillon coordonnée à l'une des ouvertures, l'information pouvant éventuellement déclenchée en même temps la fonction de prélèvement d'échantillons d'une partie des récipients d'échantillons (3) par l'analyseur (200).

3. Appareil selon la revendication 2, caractérisé en ce qu'il comporte au moins une mémoire pour des données d'analyse, présentant, en relation avec les paramètres déterminant une analyse, un emplacement de mémoire dont le contenu détermine la postion, coordonnée à l'une desdites ouvertures, où doit s'effectuer le prélèvement d'échantillon pour l'analyse considérée, les données d'analyse produisant également la commande de l'analyseur (200) au cas où le prélèvement d'échantillon s'effectue sur l'ouverture supplémentaire (113).

4. Appareil selon une des revendications précédentes, caractérisé en ce qu'il comporte des moyens de commutation (384) qui font arriver, l'une après l'autre, dans la zone de la première ouverture, les positions prévues pour la réception de récipients d'échantillons.

5. Appareil selon une des revendications précédentes, caractérisé en ce que l'introduction des données caractérisant une substance à analyser d'un échantillon, s'effectue au moyen d'un support de données (312) qui correspond dans une large mesure, quant à sa réalisation technique, à un support de données pour l'introduction des données d'analyse, de sorte qu'il suffit de prévoir un seul lecteur (313) pour les deux types de supports de données.

6. Appareil selon une des revendications précédentes, caractérisé en ce que les récipients d'échantillons (103) présentent un nervurage de préhension (124) sur deux petits côtés opposés du récipient, nervurages auxquels on peut accéder par deux doigts, à travers une ouverture adéquate du recouvrement du distributeur, à la position pour l'amenée manuelle du récipient.

7. Appareil selon une des revendications précédentes, caractérisé en ce que les récipients d'échantillons (103) sont conformés, par la configuration de leur fond et/ou de leur section droite, de manière qu'ils ne puissent pas être disposés debout sur une surface plane et ne puissent pas être placés dans un râtelier à tubes à réaction avec des trous ronds.

8. Appareil selon une des revendications précédentes, caractérisé par un mode de fonctionnement selon lequel des éléments de support, portant chacun un certain nombre de récipients d'échantillons, arrivent l'un après l'autre dans une zone d'enlèvement élargie par enlèvement ou ouverture d'une partie de la carrosserie de l'appareil.

9. Appareil selon une des revendications 2 à 8, caractérisé en ce que le dispositif de commande présente une mémoire (322) organisée à la façon d'une matrice dont les « lignes » présentent pour chacun des récipients d'échantillons un certain nombre d'emplacements de mémoire adressables et qui reçoivent une information désignant l'analyse à exécuter et, partant, la position de prélèvement d'échantillon pour le récipient d'échantillon concerné à chaque fois, avec coordination à chacun de ces emplacements de mémoire d'un emplacement de mémoire supplémentaire qui reçoit le résultat d'analyse correspondant au récipient d'échantillon concerné, et que les emplacements de mémoire associés à des analyses de même type sont adressables « par colonne ».

10. Appareil selon la revendication 9, caractérisé en ce qu'il comprend un dispositif de sortie de données qui, sous la commande de la mémoire (322) organisée à la façon d'une matrice et après la fin de la mise en place des récipients d'échantillons et de l'introduction des données correspondantes, désigne, par une réunion colonne par colonne, la partie des récipients d'échantillonnés pour lesquels il y a lieu d'exécuter une analyse préfixée.

Fig.1

Fig.1a

Fig.1 b

Fig. 2

0 109 922

Fig. 3

318

Fig.3a